(19) Europäisches Patentamt
European Patent Office
Office européen des brevets

(11) **EP 2 960 860 A1**

(12) **EUROPEAN PATENT APPLICATION**

(43) Date of publication:
**30.12.2015 Bulletin 2015/53**

(51) Int Cl.:
***G06T 7/00*** *(2006.01)* ***G06T 11/60*** *(2006.01)*

(21) Application number: **14305994.7**

(22) Date of filing: **24.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Marquant, Gwenaëlle**
  **35576 Cesson-Sévigné (FR)**
• **Hellier, Pierre**
  **35576 Cesson-Sévigné (FR)**
• **Oisel, Lionel**
  **35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Method and apparatus for cloning an object from a source image to a target image**

(57)     A method and an apparatus for cloning an object from a source image to a target image are suggested. The suggested method comprises: creating a segmentation curve for the object to be cloned in the source image; calculating a stopping criterion as a function of the spatial gradients in the surroundings of the segmentation curve; adapting the segmentation curve according to a comparison between the stopping criterion and a threshold; and cloning the object with the adapted segmentation curve to the target image. According to the suggested method and an apparatus, a user can be provided with at least one modified segmentation curve adapted according to a comparison between a stopping criterion as a function of the spatial gradients in the surroundings of the segmentation curve and a threshold. Upon the validation of the user, the modified segmentation curve is used for the cloning process, which can improve the subjective quality of the cloning even with low-quality segmentation.

Fig.5

**EP 2 960 860 A1**

**Description**

**TECHNICAL FIELD**

The present disclosure generally relates to image and video processing. In particular, the present disclosure relates to a method and an apparatus for cloning an object from a source image to a target image.

**BACKGROUND**

In image processing, cloning refers to the process of segmenting an object in an image (referred to as the source image hereinafter) in order to place it into another image (referred to as the target image hereinafter). For non-professional image and video editing, seamless cloning is required to obtain good subjective quality results.

In a reference of Farbman, Z., Hoffer, G., Lipman, Y., Cohen-Or, D., & Lischinski, D. (2009, July), entitled "Coordinates for instant image cloning", ACM Transactions on Graphics (TOG) (Vol. 28, No. 3, p. 67) (referred to as [Farbman2009] hereinafter), a cloning method based on user interaction is proposed. According to the method in [Farbman2009], the user can paint over a portion of the boundary that causes an undesirable artifact in the cloned result. In this manner the marked boundary vertices are transmitted to the cloning routine as not participating in the membrane evaluation. Consequently, the mean value weights are set to zero (and the remaining weights are re-normalized accordingly).

The contour of the segmented object can be modified in the cloning process. However, some unwanted details may still lay in the contour of the object to be cloned and result in visual artifacts in the cloning scene.

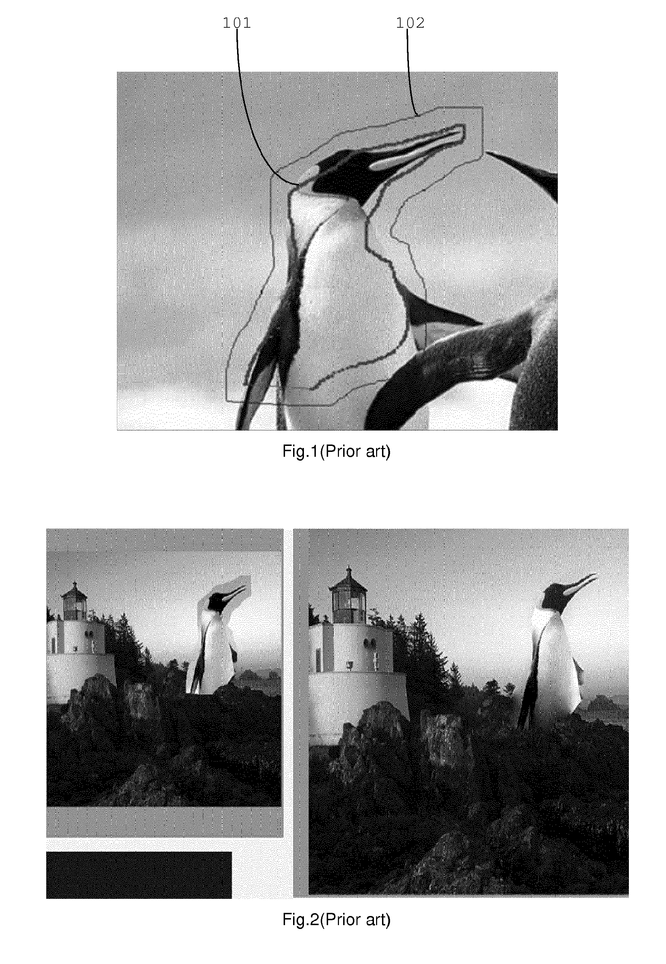

Next, the conventional cloning process will be introduced in more details with reference to Figures 1-4.

A cloning process can be based on a rough drawing of the boundary of an object in a source image. Such rough drawing can be quickly made with a mouse or with a finger of a user on a touch screen on which the source image is displayed. This will lead to the segmentation curve 101 shown in Figure 1. The drawing can then be dilated, which leads to the segmentation curve 102 shown in Figure 1, in order to have a boundary curve outside the object to be cloned. The boundary curve 102 is used to cut out the object and paste/insert the object somewhere else, normally, a target image. The mentioned dilation can be obtained by using a circular or square morphological operator of arbitrary size. The size can be initially set to 10 pixels by the system and can be modified by the user.

Figure 2 shows the result of a basic cut & paste operation (on the left) and the cloning result (on the right).

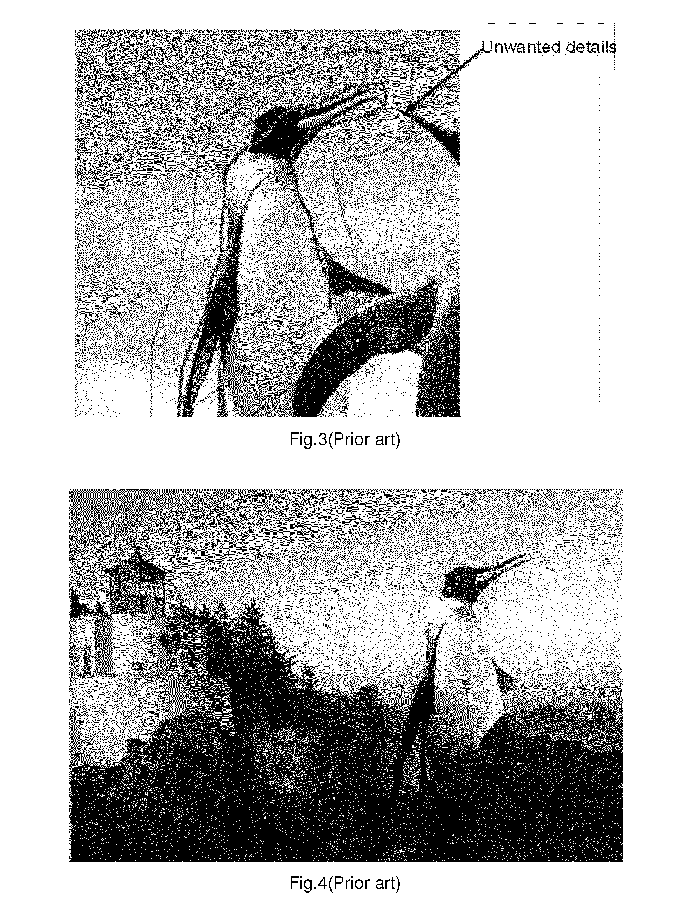

However, there might still be some unwanted artifact (generally high frequencies) in the surroundings of the object to be cloned. Figure 3 is a diagram showing an unwanted artifact. As shown in Figure 3, the beak of another penguin that stands up near to the one to be duplicated appears inside the patch to be cloned.

Figure 4 is a diagram showing the result of the seamless cloning from the source image to a target image based on the patch shown in Figure 3. As shown in Figure 4, the piece of the beak is apparently undesirable in the sky.

Therefore, there is a need for a solution for cloning an object from an image to a target image, which can improve the subjective quality of a cloning process even with low-quality segmentation.

**SUMMARY**

In view of the above problem in the conventional technologies, the present disclosure provides a method and an apparatus for cloning an object from a source image to a target image. According to the present disclosure, the width of the dilation band is automatically and iteratively adjusted in order to avoid including unwanted details.

According to a first aspect of the disclosure, a method for cloning an object from a source image to a target image is provided. The method comprises: creating a segmentation curve for the object to be cloned in the source image; calculating a stopping criterion as a function of the spatial gradients in the surroundings of the segmentation curve; adapting the segmentation curve according to a comparison between the stopping criterion and a threshold; and cloning the object with the adapted segmentation curve to the target image.

In an embodiment, the stopping criterion is a gradient Gk at pixel k in the patch to be cloned defined by the segmentation curve and along the seam.

In an embodiment, the stopping criterion is a variation in cloning interpolant.

In an embodiment, the adaption of the segmentation curve comprises a morphological process of dilating the segmentation curve.

In an embodiment, the adaption of the segmentation curve comprises a morphological process of eroding the segmentation curve.

In an embodiment, the adaption of the segmentation curve comprises a morphological process of a mixed dilation and erosion of the segmentation curve.

According to a second aspect of the disclosure, an apparatus for cloning an object from a source image to a target image is provided. The apparatus comprises: an interaction unit for a user to select a source image and a target image for the cloning, and to create a segmentation curve for the object to be cloned in the source image; and an adapting unit for providing at least one modified segmentation curve adapted according to a comparison between a stopping criterion as a function of the spatial gradients in the surroundings of the segmentation curve and a threshold.

In an embodiment, upon the creation of the segmentation curve, the interaction unit displays the result of the cloning of the object in the target image.

In an embodiment, upon the selection of one of the at least one modified segmentation curve, the interaction unit displays the result of the cloning of the object in the target image.

In an embodiment, the adapting unit modifies the segmentation curve with a morphological process of dilating the segmentation curve.

In an embodiment, the adapting unit modifies the segmentation curve with a morphological process of eroding the segmentation curve.

In an embodiment, the adapting unit modifies the segmentation curve with a morphological process of a mixed dilation and erosion of the segmentation curve.

According to a third aspect of the disclosure, a computer program product downloadable from a communication network and/or recorded on a medium readable by computer and/or executable by a processor is provided. The computer program product comprises program code instructions for implementing the steps of the method according to the first aspect of the invention.

According to a fourth aspect of the disclosure, a Non-transitory computer-readable medium comprising a computer program product recorded thereon and capable of being run by a processor is provided. The Non-transitory computer-readable medium includes program code instructions for implementing the steps of a method according to the first aspect of the invention.

It is to be understood that more aspects and advantages of the invention will be found in the following detailed description of the present invention.

**BRIEF DESCRIPTION OF THE DRAWINGS**

The accompanying drawings are included to provide further understanding of the embodiments of the invention together with the description which serves to explain the principle of the embodiments. The invention is not limited to the embodiments.

In the drawings:

Figure 1 is diagram showing a segmentation of an object in a source image with a mouse or a finger during a cloning process;

Figure 2 is a diagram showing the result of a basic cut & paste operation (on the left) and the MVC cloning result (on the right);

Figure 3 is a diagram showing an unwanted artifact appearing inside the patch to be cloned;

Figure 4 is a diagram showing the result of the seamless cloning from the source image to a target image based on the patch shown in Figure 3;

Figure 5 is a flow chart showing a method for cloning an object from a source image to a target image according to an embodiment of the invention;

Figure 6 is a diagram showing gradients in the area of the cloning process for image in Figure 4;

Figure 7 is a diagram showing the delineation adapted according to the method of the embodiment of the invention

Figure 8 is a diagram showing the result of the seamless cloning based on the adaptive delineation;

Figure 9 is a block diagram showing a apparatus for cloning an object from a source image to a target image according to an embodiment of the invention; and

Figures 10-14 are diagrams showing user interfaces for implementing the method according to the embodiment of the invention.

**DESCRIPTION OF EMBODIMENTS**

An embodiment of the present invention will now be described in detail in conjunction with the drawings. In the following description, some detailed descriptions of known functions and configurations may be omitted for conciseness.

An embodiment of the invention provides a method for cloning an object from a source image to a target image. Next, the method of the embodiment of the present invention will be described in details.

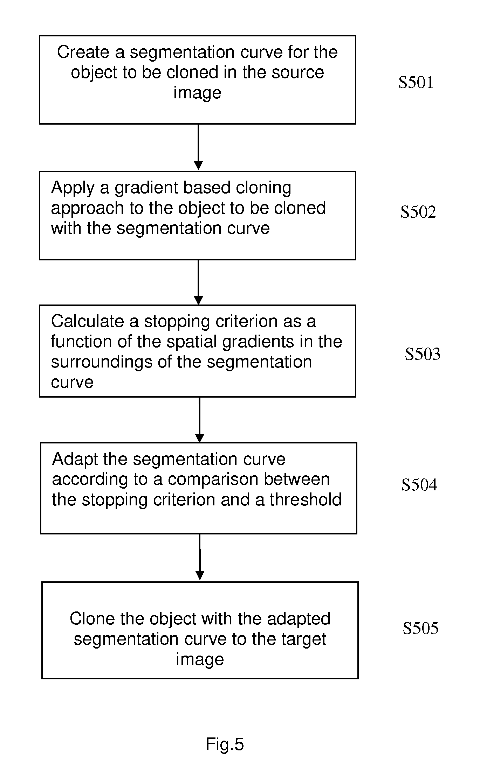

Figure 5 is a flow chart showing a method for cloning an object from a source image to a target image according to an embodiment of the invention.

As shown in Figure 5, at step S501, it creates a segmentation curve for the object to be cloned in the source image. As described above, the segmentation curve can be drawn by a user with an input device (for example, a mouse) on the screen of a display apparatus. In the case that the screen of the display apparatus is a touch sensitive type, the user can use his/her finger as the input device to create the segmentation curve. The display apparatus refers to any apparatus capable of displaying image/video to a user including, but not limited to, computer, laptop, mobile device, and tablet device, etc.

At the next step S502, it applies a gradient based cloning approach to the object to be cloned with the segmentation curve. Any known gradient based cloning approach, such as the one described in [Farbman2009], can be applied in this step. It can be appreciated that human visual behavior pays more attention to measuring local intensity differences rather than the intensity itself. Solving the cloning problem in the gradient domain can be classified into two approaches: either solving a Poisson equation or using a barycentric coordinates approach to solve the interpolation problem. No further details will be provided in this respect since it is well known to a person skilled in the art and beyond the scope of the present disclosure.

At step S503, it calculates a stopping criterion as a function of the spatial gradients in the surroundings of the segmentation curve.

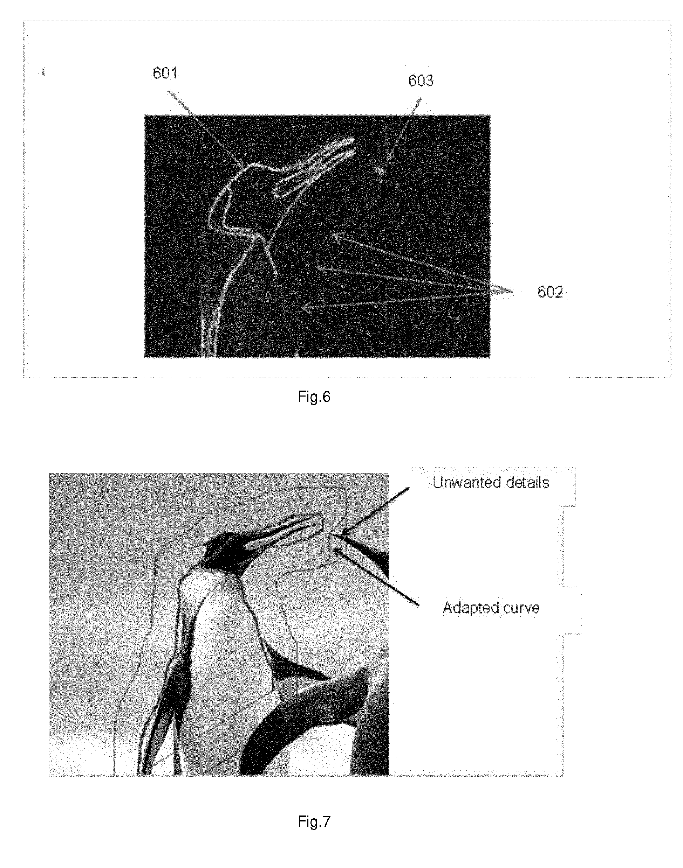

One example of the stopping criterion is a gradient $G_k$ at pixel k in the patch to be cloned defined by the segmentation curve and along the seam. Figure 6 is a diagram showing gradients in the area of the cloning process for the image in Figure 4. In Figure 6, the line 601 refers to the gradients on the object to be cloned and the line 602 refers to the gradients along the seam. Gradients along the seam are assumed to be a low, which means an unnoticeable seam. When higher gradients arise in the seam area, it means that unwanted details have been added. As shown in Figure 6, the reference number 603 indicates higher gradients in the seam area.

In this example, the gradient Gk may be obtained as follows for every pixels k by:

computing original and vertical gradients for each color component; and
computing L-2 norm.

Another example of the stopping criterion is a variation in cloning interpolant, i.e.

$$\frac{d}{dt} \iint_{\Omega P_k} correction(x, y). dx\, dy$$

where :

$\Omega P_k$ are the pixels included both in a disk centered at contour pixel Pk and inside the patch; and
correction(x,y) is the MVC interpolant at pixel (x,y).

At step S504, it adapts the segmentation curve according to a comparison between the stopping criterion and a threshold.

In the case of the first example of stopping criterion described above, it can determine if gradient Gk at pixel k in the patch to be cloned and along the seam exceeds a threshold T1.

In the case of the second example of stopping criterion described above, it can determine if variation in cloning interpolant exceeds a threshold T2, i.e.

$$\frac{d}{dt} \iint_{\Omega P_k} correction(x, y). dx\, dy > T2$$

where :

$\Omega P_k$ are the pixels included both in a disk centered at contour pixel Pk and inside the patch; and $\square$
correction(x,y) is the MVC interpolant at pixel (x,y).

With the above determination based on the stopping criterion over a threshold, it can detect whether and where unwanted details exist.

Then the segmentation curve is adapted according to the determination made based on the comparison between the stopping criterion and the threshold.

The adaption of the segmentation curve can be implemented by a morphological process to the segmentation curve.

The morphological process can comprise dilating the segmentation curve. It can be appreciated that the segmentation curve can be made by a rough drawing, which may be not precise enough for the following cloning steps. For example, in the above-described case of a touch screen inputted by a user finger, some factors, such as a finger width and a trembling finger, may influence the preciseness of the segmentation curve. Thus the segmentation curve can be dilated with a structuring element of different size. The objective of the dilation is to enlarge the segmentation curve so that it will lay outside the contour of the object to be cut & cloned. Dilation also ensures a smoothing of the drawing to erase shivers.

The morphological process can also comprise eroding the segmentation curve. In this case, it will keep the segmentation curve and erode it with a small structuring element where unwanted details have been detected. In this sense, the erosion is just to reduce the segmentation curve where it is detected to be not well positioned.

The morphological process also can comprise a mixed dilation and erosion of the segmentation curve, which is known as closing and opening in the image processing as the basic workhorse of morphological noise removal.

The morphological process can be carried out iteratively, which applies a circular or square morphological operator of arbitrary size S. In one example, the size can be initially fixed to 10 pixels, or tuned manually by the user.

For example, if it detects that there exists at least one pixel j of which the stopping criteria exceeds a threshold, it can erode this area with a structuring element of size 1, or dilate the original segmentation curve using the chosen morphological operator of size S and using size S-1 in the surroundings of the detected stopping criteria pixel.

Figure 7 is a diagram showing the adapted segmentation curve according to the method of the embodiment of the invention.

According to the embodiment of the invention, unwanted details can be automatically detected given any line detector for instance. Once detected, unwanted details can be either automatically avoided forcing an adaptive smaller dilation band in this area or interactively indicated for a user to decide whether to keep or not.

It can be appreciated that if no unwanted details are detected by the comparison between the stopping criterion and a threshold, there is no need to adapt the original segmentation curve.

At step S505, it clones the object with the adapted segmentation curve to the target image. Any known cloning process can be used and no further details will be provided in this respect.

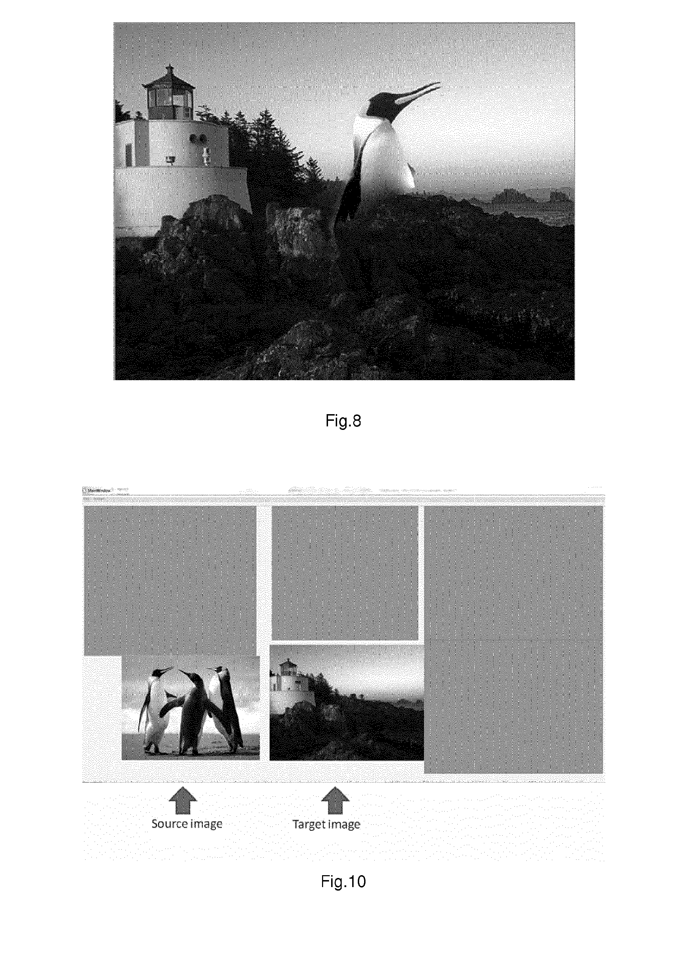

Figure 8 is a diagram showing the result of the seamless cloning based on the adaptive delineation. As shown in Figure 8, no visual artifact is visible in the area of the beak of the penguin in the final target image.

The invention can be used in cloning applications to provide at least one adapted segmentation curve based on a rough segmentation curve made by a user to achieve a more precise cloning.

The at least one adapted segmentation curve needs to respect the following constraints:

1. it encompasses the object to be cloned;

2. it includes neither other objects nor undesirable gradients that will cause artifact, for example, as shown in Figure 4.

The above constraints can be achieved by a PDE (partial differential equation) governing the evolution of the segmentation curve. There exist techniques which used such a formulation for level set segmentation, interpolation or smoothing. The embodiment of the invention can rely on the same formalism and incorporate the gradient in the formulation. More specifically, the evolution of the segmentation curve is performed, for each point, along the normal to the contour of the segmentation curve. It is easy to incorporate the gradient as a stopping criterion as described above, i.e., the evolution of the segmentation curve for any point is stopped if a certain amount of gradient magnitude is detected.

The above constraints can also be achieved by using mathematical morphology. First, a binary mask of the object to be cloned is performed using the rough segmentation curve. Then, a dilation of the rough segmentation curve is performed using a structuring element of size M that depends on the detected gradient magnitude. For instance structuring element can be a square of size 15 everywhere and progressively decreases to half this size where high gradient magnitude is detected. Finally, a contour detector (such as Canny or Prewitt approaches) is applied on the final dilated binary mask to get an adapted segmentation curve.

An embodiment of the invention provides an apparatus for cloning an object from a source image to a target image.

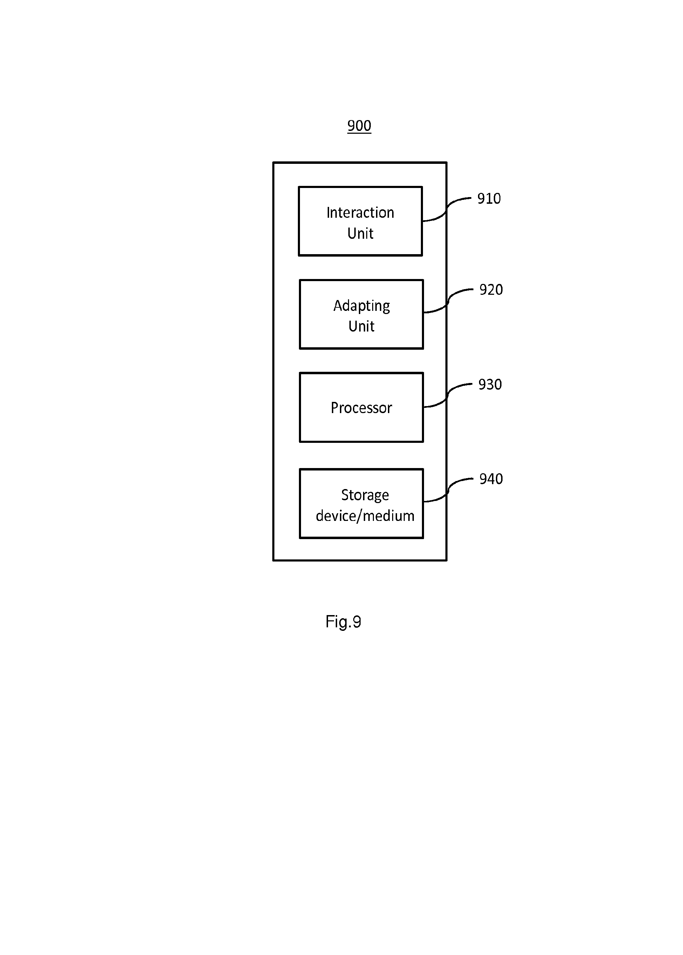

Figure 9 is a block diagram showing a apparatus for cloning an object from a source image to a target image according to an embodiment of the invention.

The apparatus 900 can be any apparatus capable of displaying image/video to a user for the user to carry out a cloing process, which includes, but not limited to, computer, laptop, mobile device, and tablet device, etc.

The apparatus 900 comprises an interaction unit 910 for interacting with a user to interchange command and instructions for implementing the cloning process. In one example, the interaction unit 910 comprises a touch screen.

Figure 10 is a diagram showing a user interface implemented on the interaction unit for a user to select a source image and a target image for the cloning. In Figure 9, the user interface presents a source image to the user, from which an object (in this example, a penguin) can be selected, segmented and then cloned to a target image (in this example, a lighthouse) which is also presented to the user.

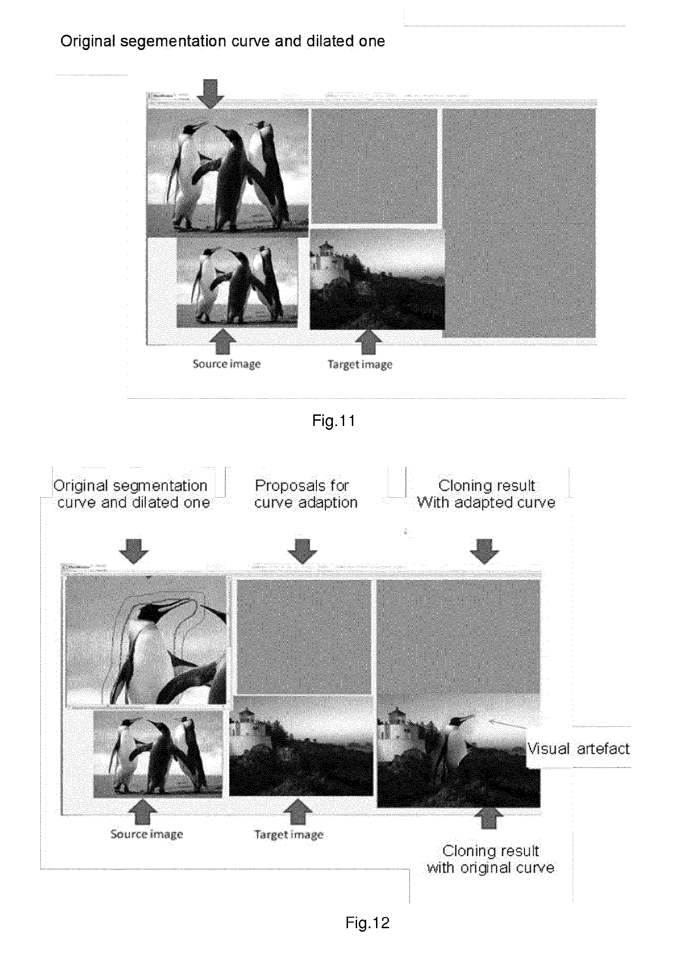

Figure 11 is a diagram showing a user interface for the user to create a segmentation curve for the object to be cloned in the source image. As shown in Figure 11, once the source image is selected, the user can roughly delineate the piece of the source image to be duplicated into the target image. Optionally, because of the very approximate delineation, a morphologic dilation can be made automatically.

Optionally, the preliminary result of the cloning can be displayed by the interaction unit automatically in the target image, as shown in Figure 11. At this moment, the user can look at the full automatic result through the interaction unit. As indicated in Figure 12, a visual artifact exists in the cloning result made by the original segmentation curve.

According to the embodiment of the invention, the apparatus 900 further comprises an adapting unit 920 for providing at least one modified segmentation curve adapted according to a comparison between the stopping criterion and a threshold. The segmentation curve can be adapted according to the method of the above-described embodiment.

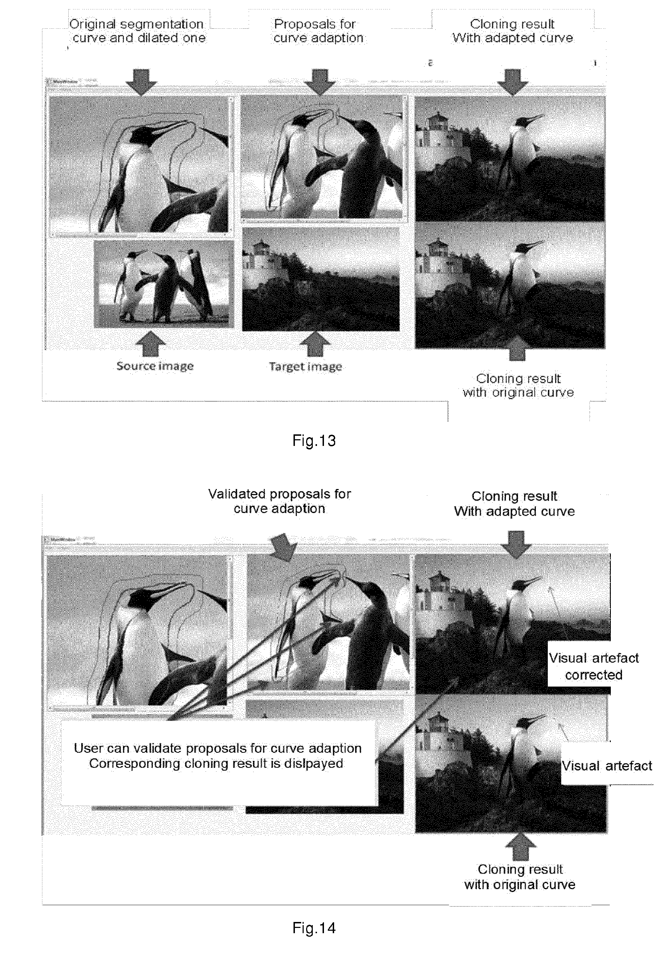

As shown in Figure 13, modifications of the segmentation curve are provided to the user by the interaction unit 910, which only need to be validated or not by the user, for instance, with a mouse click. In Figure 13, only one proposal for the modified segmentation curve is shown. However, it can be appreciated that more proposals can be provided to the user.

As shown in Figure 14, upon the validation of the modified segmentation curve, associated cloning result is displayed simultaneously in the target image by the interaction unit.

As shown in Figure 9, for the operation of the interaction unit 910, the adapting unit 920 and other components of the apparatus 900, at least one processor 930 and at least one storeage device/ medium 940 are included in the apparatus 900.

With the apparatus 900 according to the embodiment of the invention, a user can be provided with at least one modified segmentation curve adapted according to a comparison between a stopping criterion as a function of the spatial gradients in the surroundings of the segmentation curve and a threshold. Upon the validation of the user, the modified segmentation curve is used for the cloning process, which can improve the subjective quality of the cloning even with low-quality segmentation.

A further embodiment of the invention provides a computer program product downloadable from a communication network and/or recorded on a medium readable by computer and/or executable by a processor, comprising program code instructions for implementing the steps of the method described above.

A further embodiment of the invention provides a non-transitory computer-readable medium comprising a computer program product recorded thereon and capable of being run by a processor, including program code instructions for implementing the steps of a method described above.

It is to be understood that the present invention may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method for cloning an object from a source image to a target image, **characterized in that** it comprises the steps of:

   creating (S501) a segmentation curve for the object to be cloned in the source image;
   calculating (S503) a stopping criterion as a function of the spatial gradients in the surroundings of the segmentation curve;
   adapting (S504) the segmentation curve according to a comparison between the stopping criterion and a threshold; and
   cloning (S505) the object with the adapted segmentation curve to the target image.

2. The method according to the claim 1, **characterized in that** the stopping criterion is a gradient Gk at pixel k in the patch to be cloned defined by the segmentation curve and along the seam.

3. The method according to the claim 1, **characterized in that** the stopping criterion is a variation in cloning interpolant.

4. The method according to the claim 1, **characterized in that** the adaption of the segmentation curve comprises a morphological process of dilating the segmentation curve.

5. The method according to the claim 1, **characterized in that** the adaption of the segmentation curve comprises a morphological process of eroding the segmentation curve.

6. The method according to the claim 1, **characterized in that** the adaption of the segmentation curve comprises a morphological process of a mixed dilation and erosion of the segmentation curve.

7. The method according to any one of the claims 4-6, **characterized in that** the morphological process is carried out iteratively, applying a circular or square morphological operator of arbitrary size.

8. An apparatus (900) for cloning an object from a source image to a target image, **characterized in that** it comprises:

   an interaction unit (910) for a user to select a source image and a target image for the cloning, and to create a segmentation curve for the object to be cloned in the source image; and
   an adapting unit (920) for providing at least one modified segmentation curve adapted according to a comparison between a stopping criterion as a function of the spatial gradients in the surroundings of the segmentation curve and a threshold.

9. The apparatus according to the claim 8, **characterized in that** upon the creation of the segmentation curve, the interaction unit (910) displays the result of the cloning of the object in the target image.

10. The apparatus according to the claim 8, **characterized in that** upon the selection of one of the at least one modified segmentation curve, the interaction unit (910) displays the result of the cloning of the object in the target image.

11. The apparatus according to the claim 8, **characterized in that** the adapting unit (920) modifies the segmentation curve with a morphological process of dilating the segmentation curve.

12. The apparatus according to the claim 8, **character-**

**ized in that** the adapting unit (920) modifies the segmentation curve with a morphological process of eroding the segmentation curve.

13. The apparatus according to the claim 8, **characterized in that** the adapting unit (920) modifies the segmentation curve with a morphological process of a mixed dilation and erosion of the segmentation curve.

14. Computer program product downloadable from a communication network and/or recorded on a medium readable by computer and/or executable by a processor, comprising program code instructions for implementing the steps of a method according to at least one of claims 1 to 7.

15. Non-transitory computer-readable medium comprising a computer program product recorded thereon and capable of being run by a processor, including program code instructions for implementing the steps of a method according to at least one of claims 1 to 7.

101                    102

Fig.1(Prior art)

Fig.2(Prior art)

Fig.3(Prior art)

Fig.4(Prior art)

| | |
|---|---|
| Create a segmentation curve for the object to be cloned in the source image | S501 |
| Apply a gradient based cloning approach to the object to be cloned with the segmentation curve | S502 |
| Calculate a stopping criterion as a function of the spatial gradients in the surroundings of the segmentation curve | S503 |
| Adapt the segmentation curve according to a comparison between the stopping criterion and a threshold | S504 |
| Clone the object with the adapted segmentation curve to the target image | S505 |

Fig.5

Fig.6

Fig.7

Fig.8

Fig.10

900

Interaction Unit — 910

Adapting Unit — 920

Processor — 930

Storage device/medium — 940

Fig.9

Original segementation curve and dilated one

Source image     Target image

Fig.11

Original segmentation curve and dilated one

Proposals for curve adaption

Cloning result With adapted curve

Visual artefact

Source image     Target image

Cloning result with original curve

Fig.12

Fig.13

Fig.14

Europäisches
Patentamt

European
Patent Office

Office européen
des brevets

## EUROPEAN SEARCH REPORT

Application Number

EP 14 30 5994

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG-LUE ZHANG ET AL: "ImageAdmixture: Putting Together Dissimilar Objects from Groups", IEEE TRANSACTIONS ON VISUALIZATION AND COMPUTER GRAPHICS, IEEE SERVICE CENTER, LOS ALAMITOS, CA, US, vol. 18, no. 11, 1 November 2012 (2012-11-01), pages 1849-1857, XP011460061, ISSN: 1077-2626, DOI: 10.1109/TVCG.2012.68 * abstract * * page 1851, paragraph 3.3 - page 1853, paragraph 4.1 * ----- | 1-15 | INV. G06T7/00 G06T11/60 |
| A | JIAYA JIA ET AL: "Drag-and-drop pasting", ACM TRANSACTIONS ON GRAPHICS, vol. 25, no. 3, 1 July 2006 (2006-07-01), page 631, XP055151245, ISSN: 0730-0301, DOI: 10.1145/1141911.1141934 * abstract * * page 631, paragraph 1 * * page 632, paragraph 3 - page 634, paragraph 4.1 * ----- | 1-15 | |
| A | PEREZ P ET AL: "Poisson image editing", 1 July 2003 (2003-07-01), ACM TRANSACTIONS ON GRAPHICS (TOG), ACM, US, PAGE(S) 313 - 318, XP040167345, ISSN: 0730-0301 * abstract * * page 314, paragraph 2 - page 318, paragraph 4 * ----- -/-- | 1-15 | TECHNICAL FIELDS SEARCHED (IPC)<br><br>G06T |

The present search report has been drawn up for all claims

| Place of search | Date of completion of the search | Examiner |
|---|---|---|
| Munich | 26 January 2015 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 30 5994

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERIC N. MORTENSEN ET AL: "Intelligent scissors for image composition", PROCEEDINGS OF THE 22ND ANNUAL CONFERENCE ON COMPUTER GRAPHICS AND INTERACTIVE TECHNIQUES , SIGGRAPH '95, 6 August 1995 (1995-08-06), pages 191-198, XP055164568, New York, New York, USA DOI: 10.1145/218380.218442 ISBN: 978-0-89-791701-8 * abstract * * page 192, paragraph 3 - page 197, paragraph 5 * | 1-15 | |
| A | ASEEM AGARWALA ET AL: "Interactive digital photomontage", ACM TRANSACTIONS ON GRAPHICS, vol. 3, no. 23, 1 August 2004 (2004-08-01) , pages 294-302, XP055164343, ISSN: 0730-0301, DOI: 10.1145/1015706.1015718 * abstract * * page 296, paragraph 2 - page 300, left-hand column, line 4 * | 1-15 | TECHNICAL FIELDS SEARCHED (IPC) |

The present search report has been drawn up for all claims

| Place of search | Date of completion of the search | Examiner |
|---|---|---|
| Munich | 26 January 2015 | Zamuner, Umberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FARBMAN, Z. ; HOFFER, G. ; LIPMAN, Y. ; CO- HEN-OR, D. ; LISCHINSKI, D.** Coordinates for in- stant image cloning. *ACM Transactions on Graphics (TOG),* July 2009, vol. 28 (3), 67